# EUROPÄISCHE PATENTANMELDUNG

(11) **EP 4 223 139 A1**
(43) Veröffentlichungstag der Anmeldung: **09.08.2023**
(21) Anmeldenummer: 22175793.3
(22) Anmeldetag: 27.05.2022
(51) Int. Cl.: A23K 10/30, A23K 50/30, A23K 50/75

(54) **NAHRUNGSZUSATZ FÜR TIERNAHRUNG**

(30) Priorität: 03.02.2022 AT 5001922 U; 03.02.2022 EP 22154954
(71) Anmelder: Beichler, Hanspeter, 8113 Stiwoll (AT)
(72) Erfinder: Beichler, Hanspeter, 8113 Stiwoll (AT)
(74) Vertreter: Wirnsberger & Lerchbaum Patentanwälte OG

(57) **Zusammenfassung**

Die Erfindung betrifft einen Nahrungszusatz für Tiernahrung, insbesondere einen Aromastoff. Erfindungsgemäß ist vorgesehen, dass der Nahrungszusatz Kreuzkümmel und/oder Zimt, insbesondere Zimtpulver, und optional Kurkuma enthält.

Weiter betrifft die Erfindung ein Verfahren zur Ernährung eines Tieres.

## Beschreibung

Die Erfindung betrifft einen Nahrungszusatz für Tiernahrung, insbesondere einen Aromastoff.

Darüber hinaus betrifft die Erfindung ein Verfahren zur Ernährung eines Tieres, insbesondere zur Ernährung eines Schweines, einer Pute, eines Huhnes oder eines anderen Geflügels.

Nahrungszusätze für die Ernährung von Tieren sind aus dem Stand der Technik bereits bekannt geworden. So offenbart beispielsweise das Dokument EP 0 497 287 B1 einen Nahrungszusatz, der Calzium und Silicium enthält, um eine Knochenfestigkeit zu verbessern.

Andere Nahrungszusätze sind darüber hinaus auch für die Ernährung von Schweinen und Geflügel wie Puten und Hühnern bekannt geworden.

Nachteilig hat sich bei aus dem Stand der Technik bekannten Tiernahrungen und Nahrungszusätzen dennoch erwiesen, dass insbesondere Schweine, Hühner, Puten und weiteres Geflügel vielfach zu wenig Nahrung aufnehmen, wodurch eine Gewichtszunahme eingeschränkt ist. Weiter wird mit Nahrungszusätzen des Standes der Technik häufig keine Verbesserung des Allgemeinzustandes erreicht.

Hier setzt die Erfindung an. Aufgabe der Erfindung ist es, einen Nahrungszusatz der eingangs genannten Art anzugeben, der zu einer verbesserten Gewichtszunahme bei Tieren, welche eine mit dem Nahrungszusatz versehene Tiernahrung aufnehmen, führt.

Weiter soll ein Verfahren zur Ernährung eines Tieres angegeben werden, welches zu einer erhöhten Gewichtszunahme des Tieres führt.

Die erste Aufgabe wird erfindungsgemäß durch einen Nahrungszusatz der eingangs genannten Art gelöst, welcher Kreuzkümmel und/oder Zimt, insbesondere Zimtpulver, und optional Kurkuma enthält.

Im Rahmen der Erfindung wurde erkannt, dass Kreuzkümmel und/oder Zimt bei Tieren appetitanregend wirkt und Tiere dadurch größere Mengen an Tiernahrung aufnehmen können. Ferner konnte auch eine Verbesserung eines Allgemeinzustandes bei Tieren beobachtet werden, die eine mit einem entsprechenden Nahrungszusatz versehene Tiernahrung erhalten. Der Nahrungszusatz hat positive Wirkungen bei sämtlichen Tieren, insbesondere Nutztieren. Eine besonders gute Wirkung wurde insbesondere bei Schweinen, Puten und dergleichen beobachtet, wenngleich eine Anwendung grundsätzlich auch bei Hühnern, Rindern und dergleichen vorteilhaft ist. Darüber hinaus hat sich auch gezeigt, dass Kreuzkümmel, welcher auch als Kumin oder Cumin bezeichnet wird, in Verbindung mit Zimt besonders appetitanregend wirkt und ebenfalls eine Verbesserung des Allgemeinzustandes zur Folge hat.

Der Nahrungszusatz kann somit nur aus Kreuzkümmel oder nur aus Zimt bestehen, wenngleich eine Kombination aus Kreuzkümmel und Zimt, gegebenenfalls in Verbindung mit weiteren Inhaltsstoffen wie Kurkuma, vorteilhaft sein kann.

Darüber hinaus hat sich auch gezeigt, dass Kreuzkümmel und/oder Zimt, gegebenenfalls in Verbindung mit Kurkuma, gesundheitsfördernde Wirkungen haben, sodass mit einer entsprechenden Tiernahrung ernährte Tiere nicht nur Gewicht zunehmen, sondern auch gesünder sind.

Bevorzugt ist vorgesehen, dass der Nahrungszusatz im Wesentlichen aus im Wesentlichen aus Kurkuma, Kreuzkümmel und Zimt besteht. Es hat sich gezeigt, dass die Kombination aus Kreuzkümmel, Kurkuma und Zimt besonders appetitanregend und gesundheitsfördernd wirkt, insbesondere bei Schweinen, Puten und anderem Geflügel.

Günstig ist es, wenn der Nahrungszusatz zu 1 Gew.-% bis 50 Gew.-%, insbesondere 10 Gew.-% bis 20 Gew.-%, aus Kreuzkümmel besteht.

Es hat sich gezeigt, dass eine besonders gute Wirkung des Nahrungszusatzes erreicht wird, wenn der Nahrungszusatz zu 20 Gew.-% bis 90 Gew.-%, insbesondere 60 Gew.-% bis 80 Gew.-%, vorzugsweise etwa 70 Gew.-% aus Kurkuma, insbesondere KurkumaPulver, besteht. Entsprechend gemahlenes Kurkuma kann beliebiger Tiernahrung auf einfache Weise beigemengt werden.

Günstig ist es ferner, wenn der Nahrungszusatz zu 5 Gew.-% bis 90 Gew.-%, insbesondere 10 Gew.-% bis 40 Gew.-%, vorzugsweise etwa 30 Gew.-%, aus Zimt besteht. Auch der Zimt wird üblicherweise in gemahlenem Zustand dem Nahrungszusatz bzw. der Tiernahrung beigemengt.

Als besonders bevorzugt für eine sowohl gute appetitanregende als auch gesundheitsfördernde Wirkung hat es sich bewährt, dass der Nahrungszusatz zu etwa 70 Gew.-% aus Kurkuma, zu etwa 20 Gew.-% aus Zimt und zu etwa 10 Gew.-% aus Kreuzkümmel besteht.

Bei einer Tiernahrung, welche insbesondere für Schweine, Puten, Hühner und anderes Geflügel vorgesehen ist, die einen Nahrungszusatz aufweist, ist es besonders günstig, wenn ein erfindungsgemäßer Nahrungszusatz eingesetzt wird. Dadurch wird eine verbesserte Aufnahme der Tiernahrung insbesondere bei Schweinen, Puten, Hühnern oder anderem Geflügel erreicht. Der Nahrungszusatz kann grundsätzlich in Verbindung mit jeder beliebigen Tiernahrung eingesetzt werden, beispielsweise mit einer Tiernahrung tierischen und/oder pflanzlichen Ursprungs.

Bei einer entsprechenden Tiernahrung, welche in grundsätzlich jeder aus dem Stand der Technik bekannten Weise aufgebaut und ausgebildet sein kann, ist es besonders bevorzugt, dass die Tiernahrung zu 0,1 Gew.-% bis 10 Gew.-%, insbesondere 0,5 Gew.-% bis 5 Gew.-%, vorzugsweise etwa 1 Gew.-%, aus dem Nahrungszusatz besteht.

Beispielsweise kann vorgesehen sein, dass die Tiernahrung Getreide, insbesondere Weizen und/oder Mais, enthält.

Die weitere Aufgabe wird erfindungsgemäß durch ein Verfahren der eingangs genannten Art gelöst, bei welchem das Tier mit einer erfindungsgemäßen Tiernahrung ernährt wird. Ein entsprechendes Verfahren führt zu einem verbesserten Wachstum des Tieres und einer darüber hinaus gehenden Verbesserung des Allgemeinzustandes, insbesondere des Gesundheitszustandes.

Im Folgenden ist die Erfindung anhand mehrerer Ausführungsbeispiele näher erläutert.

Ein erster erfindungsgemäßer Nahrungszusatz für beispielsweise Schweine, Puten oder anderes Geflügel besteht aus Kreuzkümmel oder enthält Kreuzkümmel.

Ein zweiter erfindungsgemäßer Nahrungszusatz für beispielsweise Schweine, Puten oder anderes Geflügel besteht aus Zimt oder enthält Zimt.

Ein dritter erfindungsgemäßer Nahrungszusatz für beispielsweise Schweine, Puten oder anderes Geflügel besteht aus Kreuzkümmel und Zimt, wobei der Anteil an Kreuzkümmel beispielsweise 5 Gew.-% bis 95 Gew.-% betragen kann, wobei der Rest auf 100 Gew.-% durch Zimt gebildet wird.

Ein vierter erfindungsgemäßer Nahrungszusatz besteht zu etwa 70 % aus KurkumaPulver, zu etwa 20 % aus Zimt-Pulver und zu etwa 10 % aus Kreuzkümmel.

Der erfindungsgemäße Nahrungszusatz ist gemäß einem Ausführungsbeispiel einer aus dem Stand der Technik bekannten Tiernahrung, welche beispielsweise ein Getreide wie Mais oder Weizen enthält, beigemengt, und zwar zu einem Anteil von etwa 1 Gew.-%. Dadurch wird ein Appetit der Tiere während des Verzehrs angeregt, was sowohl durch ein Aroma des Nahrungszusatzes, welcher sich auf die Tiernahrung überträgt, als auch durch eine günstige optische Beeinflussung der Tiernahrung durch Kurkuma und Zimt begründet ist.

Die mit einem erfindungsgemäßen Nahrungszusatz versehene Tiernahrung wird zur Ernährung von Tieren, insbesondere von Nutztieren wie Schweinen, Puten, Hühnern oder anderem Geflügel, eingesetzt, um einen Allgemeinzustand zu verbessern und eine verbesserte Nahrungsmittelaufnahme und Gewichtszunahme zu erreichen.

## Patentansprüche

1. Nahrungszusatz für Tiernahrung, insbesondere Aromastoff, **dadurch gekennzeichnet, dass** der Nahrungszusatz Kreuzkümmel und/oder Zimt, insbesondere Zimtpulver, und optional Kurkuma enthält.

2. Nahrungszusatz nach Anspruch 1, **dadurch gekennzeichnet, dass** der Nahrungszusatz im Wesentlichen aus Kurkuma, Kreuzkümmel und Zimt besteht.

3. Nahrungszusatz nach Anspruch 1 oder 2, **dadurch gekennzeichnet, dass** der Nahrungszusatz zu 1 Gew.-% bis 50 Gew.-%, insbesondere 10 Gew.-% bis 20 Gew.-%, aus Kreuzkümmel besteht.

4. Nahrungszusatz nach einem der Ansprüche 1 bis 3, **dadurch gekennzeichnet, dass** der Nahrungszusatz zu 20 Gew.-% bis 90 Gew.-%, insbesondere 60 Gew.-% bis 80 Gew.-%, vorzugsweise etwa 70 Gew.-%, aus Kurkuma, insbesondere Kurkumapulver, besteht.

5. Nahrungszusatz nach einem der Ansprüche 1 bis 4, **dadurch gekennzeichnet, dass** der Nahrungszusatz zu 5 Gew.-% bis 90 Gew.-%, insbesondere 10 Gew.-% bis 40 Gew.-%, vorzugsweise etwa 30 Gew.-%, aus Zimt besteht.

6. Nahrungszusatz nach einem der Ansprüche 1 bis 5, **dadurch gekennzeichnet, dass** der Nahrungszusatz zu etwa 70 Gew.-% aus Kurkuma, zu etwa 20 Gew.-% aus Zimt und zu etwa 10 Gew.-% aus Kreuzkümmel besteht.

7. Tiernahrung, insbesondere für Schweine, Puten, Hühner und anderes Geflügel, aufweisend einen Nahrungszusatz, **dadurch gekennzeichnet, dass** der Nahrungszusatz ein Nahrungszusatz nach einem der Ansprüche 1 bis 6 ist.

8. Tiernahrung nach Anspruch 7, **dadurch gekennzeichnet, dass** die Tiernahrung zu 0,1 Gew.-% bis 10 Gew.-%, insbesondere 0,5 Gew.-% bis 5 Gew.-%, vorzugsweise etwa 1 Gew.-%, aus dem Nahrungszusatz besteht.

9. Tiernahrung nach Anspruch 7 oder 8, **dadurch gekennzeichnet, dass** die Tiernahrung Getreide, insbesondere Weizen und/oder Mais, enthält.

10. Verfahren zur Ernährung eines Tieres, insbesondere zur Ernährung eines Schweines, einer Pute, eines Huhnes oder eines anderen Geflügels, **dadurch gekennzeichnet, dass** das Tier mit einer Tiernahrung nach einem der Ansprüche 7 bis 9 ernährt wird.
